# FASCICULE DE BREVET EUROPEEN

(11) **EP 3 366 935 B1**
(45) Date de publication et mention de la délivrance du brevet: **08.01.2020**
(21) Numéro de dépôt: 18158055.6
(22) Date de dépôt: 22.02.2018
(51) Int. Cl.: F16C 9/02, F02F 7/00, F16C 33/58, F16C 3/06

(54) **ASSEMBLAGE D'UNE BAGUE EXTÈRIEURE D'UN PALIER DE GUIDAGE EN EXTRÉMITÉ DE VILEBREQUIN SUR UN CARTER MOTEUR**
ZUSAMMENBAU EINES ÄUSSEREN RINGS EINES FÜHRUNGSLAGERS AM ENDE EINER KURBELWELLE AUF EINEM MOTORGEHÄUSE
ASSEMBLY OF AN OUTER RING OF A GUIDING BEARING AT THE END OF A CRANKSHAFT ON A CRANKCASE

(30) Priorité: 24.02.2017 FR 1751511
(43) Date de publication de la demande: 29.08.2018
(73) Titulaire: NTN-SNR Roulements, 74000 Annecy (FR)
(72) Inventeur: TEILLOU, Cyprien, 74000 Annecy (FR)
(74) Mandataire: Alatis

(56) Documents cités:
- DE-A1- 10 026 216
- DE-B- 1 131 945
- DE-U1- 20 020 203
- FR-A- 956 223
- US-A1- 2009 003 748

## Description

### DOMAINE TECHNIQUE DE L'INVENTION

L'invention se rapporte à une fixation axiale d'une bague extérieure d'un palier de guidage d'extrémité de vilebrequin au carter moteur.

### ÉTAT DE LA TECHNIQUE ANTÉRIEURE

Suivant une architecture de moteur bien connue et illustrée par exemple dans le document WO2007085740, un vilebrequin de moteur à combustion est monté en rotation sur des paliers lisses formés dans un carter moteur. Le carter moteur est formé d'une part d'un carter cylindre et d'autre part d'un carter de chapeaux de paliers. Les paliers lisses prennent forme lors de l'assemblage du carter moteur : les tourillons du vilebrequin sont positionnés sur des demi-portées du carter cylindre, le carter de chapeaux de paliers est ensuite présenté de telle sorte que des demi-portées du carter de chapeaux de paliers complémentaires des demi-portées du carter cylindre, viennent coiffer les tourillons du vilebrequin. Le carter de chapeaux de paliers est fixé au carter cylindres par des vis au niveau de chacun des chapeaux de palier, de part et d'autre des demi-portées, pour maintenir le vilebrequin et assurer son guidage.

L'évolution récente des moteurs à combustion interne à faible consommation vers des régimes moteurs à faible vitesse de rotation et couple moteur élevé, avec des fonctionnements intermittents en mode arrêt/démarrage, induisant une tension importante sur la courroie d'entraînement des accessoires, et des interruptions de la pompe à huile, sollicite fortement les paliers lisses, notamment au démarrage et durant les périodes transitoires à froid. Il est ainsi avantageux de remplacer certains des paliers lisses du vilebrequin, notamment le palier à coussinet en deux parties à l'extrémité du vilebrequin portant le volant d'inertie, par des paliers à roulement, plus performants à froid.

FR3039232 décrit un assemblage entre un vilebrequin et un volant d'inertie qui permet un guidage en rotation plus performant, notamment à froid, grâce à un palier d'extrémité comprenant une bague intérieure de guidage monobloc, frettée sur une portée de l'extrémité du vilebrequin et tournant avec le vilebrequin, et une bague extérieure monobloc fixe, montée avec un ajustement serré dans une ouverture du carter moteur, en appui contre un épaulement de l'ouverture. Le palier ainsi constitué peut être un palier lisse ou à roulement, avec des pistes de glissement ou de roulement dont le diamètre est plus important que le diamètre du tourillon, d'où une diminution de la pression de contact à l'interface entre partie tournante et partie fixe, ce qui est bénéfique notamment dans les phases de démarrage. Toutefois, l'encombrement radial important de la bague extérieure rend difficile le positionnement de vis de fixation entre le carter de chapeaux de paliers et le carter cylindre, de part et d'autre de la bague extérieure, et conduit le cas échéant à élargir le carter moteur.

Dans le document DE20020203U1 est proposée une architecture de moteur à explosion avec un bloc moteur comportant des cylindres et un vilebrequin, dont le guidage est assuré, en plus des paliers principaux, par un palier de support en appui sur le bloc moteur, logé dans une ouverture d'une paroi du bloc moteur. La palier de support comporte une bague de fixation pourvue d'alésages permettant, à l'aide de vis, sa fixation à la paroi du bloc moteur, et un roulement à billes dont la bague extérieure est logée dans la bague de fixation.

### EXPOSÉ DE L'INVENTION

L'invention vise à remédier aux inconvénients de l'état de la technique et à proposer un assemblage d'un palier de guidage d'une extrémité de vilebrequin, qui n'impose pas une augmentation des dimensions extérieures du carter moteur. Pour ce faire est proposé, selon un premier aspect de l'invention, un assemblage comprenant : un carter cylindre, au moins un chapeau de palier, et un palier de guidage de vilebrequin logé entre le chapeau de palier et le carter cylindre, caractérisé en ce que le palier de guidage comporte une bague de guidage monobloc présentant au moins une piste de guidage ayant une symétrie de révolution autour d'un axe de référence, la bague de guidage monobloc comportant un ou plusieurs premiers alésages alignés avec un ou plusieurs premiers trous correspondants du carter cylindre et un ou plusieurs deuxièmes alésages alignés avec un ou plusieurs deuxièmes trous correspondants du chapeau de palier, l'assemblage comportant en outre une ou plusieurs premières tiges de fixation traversant les premiers alésages et pénétrant dans le ou les premiers trous correspondants et une ou plusieurs deuxièmes tiges de fixation traversant les deuxièmes alésages et pénétrant dans les deuxièmes trous correspondants.

La bague de guidage monobloc constitue ainsi une pièce intermédiaire qui solidarise indirectement le chapeau de palier au carter cylindre, sans qu'il soit nécessaire de prévoir des alésages perpendiculaires à un plan contenant l'axe de référence. La bague de guidage monobloc contribue à la rigidité de l'assemblage.

La piste de guidage peut être une piste de glissement ou une piste de roulement, suivant que le palier de guidage est un palier lisse ou un palier à roulement. On peut également envisager plus d'une piste de guidage sur la bague de guidage, par exemple deux pistes de roulement, deux pistes de glissement, voire une ou plusieurs pistes de roulement et une ou plusieurs pistes de glissement, ou leur combinaison, comme décrit dans le document FR3033607.

Suivant un mode de réalisation, le ou les premiers alésages et le ou les deuxièmes alésages sont parallèles à l'axe de référence. Alternativement, les alésages peuvent être inclinés par rapport à l'axe de référence.

Suivant un mode de réalisation, la bague de guidage monobloc est en appui axial contre le chapeau de palier et contre le carter cylindre. Plus spécifiquement, la bague de guidage monobloc présente une première face en appui axial une face correspondante du chapeau de palier et pour une deuxième face en appui axial sur une face correspondante du carter cylindre, la première face et la deuxième face étant étant de préférence perpendiculaires à l'axe de référence. Le cas échéant, la première face et la deuxième face peuvent se trouver dans un même plan perpendiculaire à l'axe de référence. Le cas échéant, elles peuvent former ensemble une face annulaire plane.

De préférence la bague de guidage monobloc est en appui radial sur une demi-portée radiale du chapeau de palier et sur une demi-portée radiale du carter cylindre, tournées radialement vers l'intérieur en regard l'une de l'autre, la demi-portée radiale du chapeau de palier étant de préférence un secteur de cylindre, de préférence un secteur hémicylindrique, la demi-portée radiale du carter cylindre étant de préférence un secteur de cylindre, de préférence un secteur hémicylindrique. La portée radiale constituée par l'assemblage du carter cylindre et du carter de chapeaux de paliers permet le positionnement de la bague extérieure monobloc du palier de guidage.

Suivant un mode de réalisation, la bague de guidage comporte un ou plusieurs reliefs d'indexation coopérant avec un plusieurs reliefs d'indexation complémentaires formés sur le chapeau de palier et/ou le carter cylindre, pour faciliter le positionnement angulaire de la bague de guidage.

Selon un mode de réalisation préféré, la bague de guidage monobloc est une bague extérieure de guidage, le palier de guidage comportant en outre une bague intérieure de guidage présentant une piste de guidage située en regard de la piste de guidage de la bague extérieure de guidage. Les pistes de guidage peuvent être des pistes de roulement ou des pistes de glissement. S'il y a plus d'une piste de guidage sur la bague extérieure, on prévoit que chacune correspond à une piste de guidage de la bague intérieure.

De préférence, l'assemblage comporte en outre une portion d'extrémité d'un vilebrequin comportant une portée de frettage tournée radialement vers l'extérieur, la bague intérieure du palier de guidage étant frettée sur la portée de frettage de la portion d'extrémité du vilebrequin.

Suivant un mode de réalisation particulièrement avantageux, l'assemblage comporte en outre un volant d'inertie solidarisé au vilebrequin par des tiges de fixation traversant des alésages formés sur la bague intérieure du palier de guidage. La bague intérieure de guidage a ainsi une double fonction de guidage et de pièce intermédiaire pour la fixation du volant d'inertie.

Selon un mode de réalisation préféré, la bague de guidage monobloc est une bague extérieure de roulement sur laquelle est formé au moins un chemin de roulement extérieur tourné radialement vers l'intérieur et constituant la piste de guidage, le palier de guidage comportant en outre un chemin de roulement intérieur et des corps roulants aptes à rouler sur le chemin de roulement extérieur et sur le chemin de roulement intérieur. Le palier à roulement offre des performances à froid meilleures qu'un palier lisse.

De préférence la bague intérieure de guidage est une bague intérieure de roulement, la piste intérieure de guidage constituant le chemin de roulement intérieur.

Alternativement, le chemin de roulement intérieur peut être formé directement sur le vilebrequin, sans interposition de bague intérieure de roulement.

Selon un mode de réalisation, les tiges de fixation traversant les alésages de la bague de guidage monobloc et pénétrant dans les deuxièmes trous du chapeau de palier et les premiers trous du carter cylindre sont des vis. Les premiers trous du carter de cylindre sont de préférence des trous filetés, de préférence borgnes. Les deuxièmes trous du chapeau de palier sont de préférence des trous filetés, de préférence borgnes. La bague extérieure monobloc du palier de guidage ainsi solidarisée au carter cylindre et au carter de chapeaux de paliers réalise également l'assemblage du carter cylindre au carter de chapeaux de paliers, au niveau des surfaces d'appui et de part et d'autre des demi-portées radiales hémicylindriques.

Suivant un mode de réalisation, l'assemblage comporte un carter de chapeaux de paliers monobloc qui forme le chapeau de palier et au moins un chapeau de palier additionnel. De préférence, le chapeau de palier additionnel est pourvu d'alésages additionnels situés dans un plan perpendiculaire à l'axe de référence et alignés avec des trous additionnels correspondants formés dans le carter cylindre, l'assemblage comportant en outre une ou plusieurs premières tiges de fixation additionnelles traversant les alésages additionnels et pénétrant dans le ou les premiers trous additionnels correspondants. La bague de guidage est de préférence située à une extrémité du bloc du carter cylindre.

### BRÈVE DESCRIPTION DES FIGURES

D'autres caractéristiques et avantages de l'invention ressortiront à la lecture de la description qui suit, en référence aux figures annexées qui illustrent :
- la figure 1, une vue éclatée d'un assemblage selon un mode de l'invention ;
- la figure 2, une vue de face de l'assemblage de la figure 1, et définissant un plan de coupe de la figure 3 ;
- la figure 3, une coupe axiale d'un assemblage de la figure 1 selon l'axe II indiqué en figure 2 ;
- la figure 4, une vue isométrique d'un carter de chapeau de palier de l'assemblage de la figure 1 ;

Pour plus de clarté, les éléments identiques ou similaires sont repérés par des signes de référence identiques sur l'ensemble des figures.

### DESCRIPTION DÉTAILLÉE DE MODES DE RÉALISATION

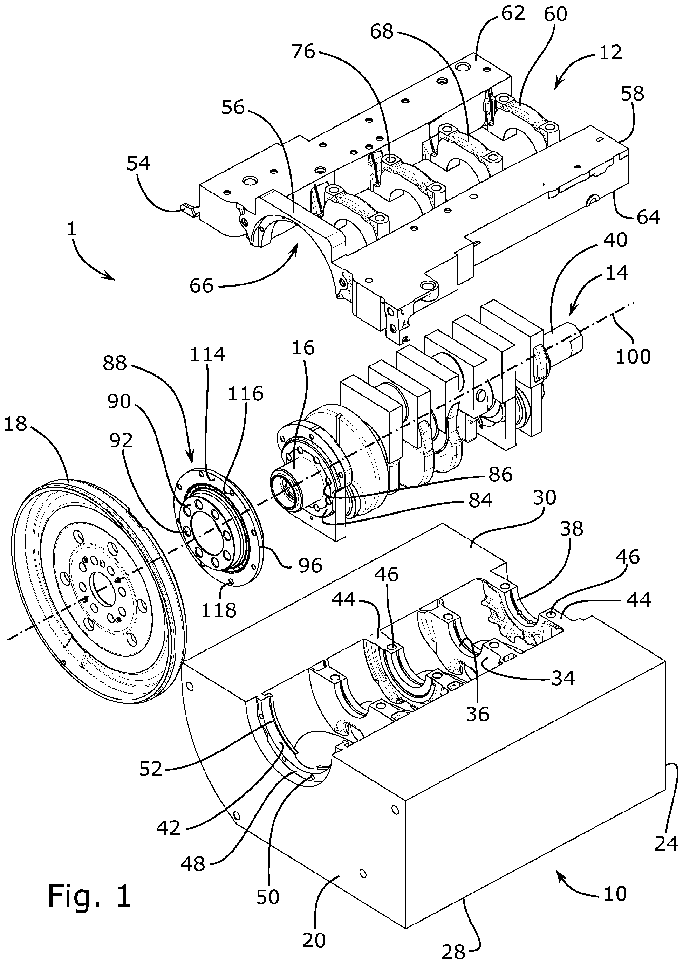

Sur les figures **1** à **3** est illustrée une partie d'un bloc moteur **1,** comportant un carter cylindre **10,** un carter de chapeaux de paliers **12,** et un vilebrequin **14** logé dans un volume intérieur du bloc moteur défini entre le carter de chapeaux de palier **12** et le carter cylindre **10.** À une extrémité avant **16** du vilebrequin **14** est fixé un volant d'inertie **18.** Dans l'ensemble de l'exposé de l'invention, l'axe de révolution **100** du vilebrequin constituera un axe de référence pour la description de chacun des composants et les termes tels que « radial », « axial », « transversal », se définiront, sauf mention contraire, par rapport à cet axe de référence. De façon arbitraire, on parlera d'avant du bloc moteur pour désigner la partie du bloc moteur proche du volant d'inertie **18,** et d'arrière pour désigner la partie opposée la plus éloignée du volant d'inertie **18.**

Le carter cylindre **10,** de préférence monobloc, est de forme générale parallélépipédique, avec une face avant transversale **20** formée par une paroi transversale avant **22,** une face arrière transversale **24** formée par une paroi arrière **26,** une face supérieure **28** destinée à servir d'appui pour une culasse (non représentée), une face inférieure **30** formant interface avec le carter de chapeau de palier, et deux faces latérales. Sur les figures, le carter cylindre **10** est retourné par rapport à sa position finale dans le véhicule et sa face supérieure **28** est représentée au-dessous de sa face inférieure **30.** Le volume intérieur du carter cylindre **32** est partagé par des cloisons transversales **34** formant des portées intérieures hémicylindriques **36** tournées radialement vers l'intérieur et vers le carter de chapeau de palier **12,** portées intérieures qui constituent des demi-paliers lisses intérieurs de guidage du vilebrequin. La paroi arrière **26** forme une portée d'extrémité arrière hémicylindriques **38** tournée radialement vers l'intérieur et vers le carter de chapeaux de paliers, et constitue un demi-palier lisse d'extrémité arrière pour le guidage de l'extrémité arrière **40** du vilebrequin, de diamètre comparable aux demi-paliers lisses intérieurs. La paroi transversale avant **22** forme une portée d'extrémité avant **42,** hémicylindrique, tournée radialement vers l'intérieur et vers le carter de chapeaux de paliers constituant une demi-portée radiale d'extrémité avant, qui est dans ce mode de réalisation de rayon plus important que les portées intérieures ou arrière. La face inférieure **30** du carter cylindre **10** présente au niveau des cloisons transversales **34** et de la paroi arrière **26** des surfaces d'appui **44** de part et d'autre de chacune des portées hémicylindriques **36, 38.** La paroi arrière **26** et les cloisons transversales **34** sont traversés par des alésages **46** orientés perpendiculairement à un plan qui contient l'axe de révolution **100** et est parallèle à la surface inférieure **30.** Ces alésages **46** débouchent sur les surfaces d'appui **44** de part et d'autre des portées hémicylindriques **36, 38.** La paroi transversale avant transversale **22** présente un premier épaulement **48** percée par plusieurs premiers trous filetés **50** axiaux (au sens où ils sont orientés parallèlement à l'axe de révolution **100)** répartis sur le pourtour de la demi-portée radiale d'extrémité avant **42** qui s'étend depuis le premier épaulement **48** jusqu'à un deuxième épaulement **52.** De façon remarquable, la paroi transversale avant transversale **22** est dépourvue d'alésages la pénétrant perpendiculairement à la face inférieure **30,** parallèlement aux alésages **46.**

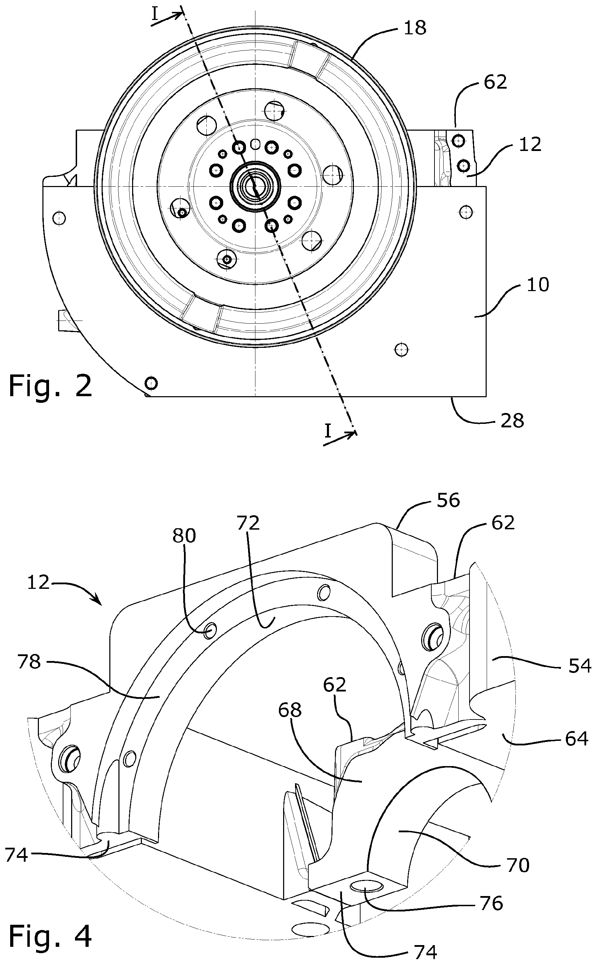

Le carter de chapeaux de paliers **12,** de préférence monobloc, est de forme générale parallélépipédique, avec une face avant transversale **54** formée par un chapeau de palier d'extrémité avant **56** illustré en détail sur la figure **4****,** une face arrière transversale **58** formée par un chapeau de palier arrière **60,** une face inférieure **62,** une face supérieure **64** formant interface avec le carter cylindre **10,** et deux faces latérales. Le volume intérieur **66** du carter de chapeaux de paliers **12** est partagé par des chapeaux de paliers transversaux **68** formant des portées intérieures **70** complémentaires hémicylindriques tournées radialement vers l'intérieur et vers le carter cylindre, et qui constituent des demi-paliers lisses intérieurs de guidage du vilebrequin, complémentaires des demi-paliers lisses intérieurs de guidage formés sur le carter cylindre. Le chapeau de palier arrière **60** forme une portée d'extrémité **71,** hémicylindrique, tournée radialement vers l'intérieur et vers le carter cylindre **10,** constituant un demi-palier lisse arrière complémentaire du demi-palier lisse d'extrémité arrière **38** formée sur la paroi arrière **26** du carter cylindre **10.** Le chapeau de palier d'extrémité avant **56** forme une portée d'extrémité **72,** hémicylindrique, tournée radialement vers l'intérieur et vers le carter cylindre, constituant une demi-portée radiale complémentaire de la demi-portée d'extrémité **42** formée sur la face avant du carter cylindre. La face supérieure du carter de chapeaux de paliers **64** présente des surfaces d'appui **74** de part et d'autre de chacune des portées hémicylindriques **70, 71** et **72.** Les chapeaux de paliers **60, 68** sont traversés par des trous **76,** orientés perpendiculairement à un plan contenant l'axe de révolution **100** et parallèle au plan de la face supérieure **64** formant interface avec le carter cylindre **10,** qui débouchent sur la face supérieure **64** (cf. figure **4****)** et sur la face inférieure **62** (cf. figure 2) du carter de chapeaux de paliers **12,** de part et d'autre des demi-paliers lisses intérieurs de guidage **70** et du demi-palier lisse d'extrémité arrière **71.** La face avant transversale **54** du carter de chapeaux de paliers présente un épaulement **78** qui comporte plusieurs deuxièmes trous filetés **80** axiaux au sens où ils sont parallèles à l'axe de révolution **100,** répartis sur le pourtour de la demi-portée radiale d'extrémité avant **72.** De façon remarquable, le chapeau de palier d'extrémité avant **56** est dépourvu de trous le traversant et orientés parallèlement aux trous **76.**

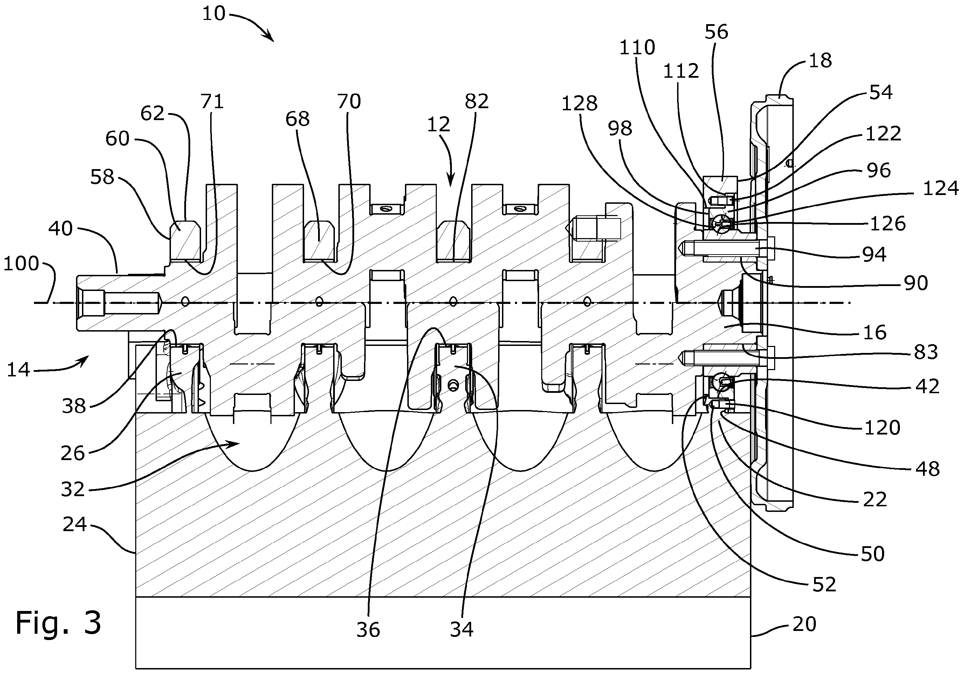

Comme illustré sur la figure **3****,** le vilebrequin **14** comporte des tourillons **82** destinés à venir se loger dans des paliers lisses intérieurs constitués par les demi-paliers lisses **36, 38** formés sur le carter cylindre **10** et les demi-paliers lisses et **70, 71** sur le carter de chapeaux de paliers **12.** Sa portion d'extrémité avant **16,** constitue une portée de frettage **83** tournée radialement vers l'extérieur, destinée à venir se loger à l'intérieur d'un volume délimité par les portées hémicylindriques d'extrémité **42** et **72** de la paroi transversale avant **22** du carter cylindre **10** et du chapeau de palier avant **56** et un épaulement plan annulaire **84** sur lequel débouchent des trous axiaux filetés **86.**

Les paliers lisses de guidage composés d'une demi-portée hémicylindrique **36, 38** du carter cylindre **10** et d'une demi-portée hémicylindrique **70, 71** du carter de chapeaux de palier **12** prennent forme lors de l'assemblage du carter cylindre **10** au carter de chapeaux de palier **12,** par des moyens de fixation non représentés, en l'occurrence des tiges de fixation et plus spécifiquement des vis, introduits dans les alésages **76** du carter de chapeaux de paliers **12** et fixés dans les trous filetés **46** correspondants du carter cylindre **10.** Une portée radiale d'extrémité avant est également constituée lors de cet assemblage au niveau des demi-portées radiales d'extrémité **72** et **42** de la paroi transversale avant **22** du carter cylindre **10** et du chapeau de palier avant **56.**

De façon remarquable, le bloc moteur **1** est équipé d'un palier de guidage d'extrémité **88** logé dans cette portée radiale d'extrémité. Le palier de guidage **88** comporte une bague intérieure monobloc **90** frettée sur la portée radiale d'extrémité **83** du vilebrequin et venant en appui axial contre l'épaulement d'extrémité **84** de l'extrémité avant **16** du vilebrequin **14.** La bague intérieure **90** présente des alésages axiaux **92** alignés avec les trous axiaux filetés **86** du vilebrequin **14.** Des tiges de fixation filetées **94** peuvent ainsi être insérées dans des alésages formés sur le volant d'inertie **18** et permettent ainsi de solidariser le volant d'inertie **18** au vilebrequin **14** en traversant les alésages **92** formés sur la bague intérieure **90** du palier de guidage et vissées dans les trous axiaux **86** de l'épaulement **84.**

Le palier de guidage **88** comporte en outre une bague extérieure de guidage **96,** monobloc, présentant à partir d'une face transversale d'extrémité **98** tournée vers l'intérieur du bloc moteur, une portée cylindrique **110** tournée radialement vers l'extérieur et destinée à venir se loger dans la portée radiale formée par les demi-portées radiales **42** et **72** de la paroi transversale avant **20** du carter cylindre **10** et du chapeau de palier avant **56,** un épaulement **112** tourné vers l'intérieur du bloc moteur, ainsi qu'une face transversale d'extrémité **114** tournée vers le volant d'inertie **18.** Un ou plusieurs premiers alésages axiaux **118,** alignés avec les premiers trous filetés axiaux **50** correspondants du carter cylindre **10,** et un ou plusieurs deuxièmes alésages axiaux **116,** alignés avec les deuxièmes trous filetés axiaux **80** correspondants du carter de chapeaux de paliers **12** traversent axialement la bague extérieure de guidage **96** en débouchant à une extrémité sur la face transversale d'extrémité **114** et à l'extrémité opposé sur l'épaulement **112.**

La bague extérieure de guidage **96** est assemblée aux faces avant **20** et **54** du carter cylindre et du carter de chapeaux de palier par des premières tiges de fixation filetées **120** introduites dans les premiers alésages axiaux **118** puis vissées dans le ou les premiers trous filetés borgnes **50** correspondants du carter cylindre et une ou plusieurs deuxièmes tiges de fixation filetées **122** introduites dans les deuxièmes alésages axiaux **116** et vissées dans les deuxièmes trous filetés borgnes **80** correspondants du carter de chapeaux de paliers. La bague extérieure **96** du palier de guidage **88** vient en appui axial par son épaulement **112** contre l'épaulement **78** de la face avant du carter de chapeaux de paliers d'une part, et par sa face transversale d'extrémité **98** contre le deuxième épaulement **52** délimitant la demi-portée radiale d'extrémité du carter cylindre. Alternativement, il serait naturellement envisageable que la bague vienne en appui axial par son épaulement **112** à la fois contre l'épaulement **78** de la face avant du carter de chapeaux de paliers, et contre le premier épaulement **48** délimitant la demi-portée radiale d'extrémité du carter cylindre, pour autant que ces les deux épaulements **48, 78** soient coplanaires.

Le palier de guidage d'extrémité **88** est ici un palier à roulement. Sur la bague extérieure de guidage monobloc **96** est formé au moins un chemin de roulement annulaire **124** tourné radialement vers l'intérieur qui fait face à un chemin de roulement annulaire **126** formé sur la bague intérieure de guidage **90,** et le palier de guidage d'extrémité **88** comporte des corps roulants **128** se déplaçant sur les chemins de roulement **126, 124.**

La bague extérieure de guidage **96** est en appui radial, de préférence ajusté, dans les demi-portées radiales **42** et **72** de la paroi transversale avant **20** du carter cylindre **10** et du chapeau de palier avant **56.**

Suivant un autre mode de réalisation, la face avant du carter de chapeaux de paliers et/ou du carter moteur présente des reliefs d'indexation complémentaires avec des reliefs d'indexation de la bague extérieure du palier de guidage.

De façon remarquable, le montage de la bague extérieure monobloc de guidage **96** réalise la fixation du chapeau de palier d'extrémité avant **56** et palie à l'absence de vis en fixant directement le chapeau de palier d'extrémité avant **56** au bloc cylindre **10.**

Diverses variantes sont envisageables. La bague extérieure de guidage **96** peut comporter un ou plusieurs reliefs d'indexation coopérant avec un ou plusieurs reliefs d'indexation complémentaires formés sur la face avant du carter de chapeaux de paliers et/ou la face avant du carter cylindre.

Il est envisageable de prévoir à l'extrémité arrière **40** du vilebrequin un guidage par un palier à roulement similaire au palier à roulement **88.** Dans cette hypothèse, on peut prévoir entre le chapeau de palier d'extrémité arrière **60** et la paroi arrière **26** un montage similaire à celui décrit précédemment entre le chapeau de palier d'extrémité avant **56** et la paroi transversale avant **22** du carter cylindre **10.**

Suivant un mode de réalisation, le palier de guidage **88** comporte au moins un élément de palier lisse. La bague de guidage monobloc **96** comporte au moins une piste de glissement tournée radialement vers l'intérieur, qui peut coopérer directement avec un tourillon formé à l'extrémité avant **16** du vilebrequin **14** ou sur une bague intérieure lisse frettée sur l'extrémité avant **16** du vilebrequin **14.**

L'invention a été décrite par référence à un bloc moteur comportant un carter cylindre **10** et un carter de chapeaux de paliers monobloc **12.** Elle est toutefois applicable à des chapeaux de paliers séparés, montés individuellement sur le carter cylindre **10.**

Naturellement, les exemples présentés sur les figures ci-jointes ne sont donnés qu'à titre illustratif et non limitatif. Il est explicitement prévu que l'on puisse combiner entre eux les différents modes de réalisation illustrés pour en proposer d'autres.

## Revendications

1. Assemblage comprenant : un carter cylindre (10), au moins un chapeau de palier (56), et un palier de guidage (88) de vilebrequin (14) logé entre le chapeau de palier (56) et le carter cylindre (10), **caractérisé en ce que** le palier de guidage (88) comporte une bague de guidage monobloc (96) présentant au moins une piste de guidage (124) ayant une symétrie de révolution autour d'un axe de référence (100), la bague de guidage monobloc (96) comportant un ou plusieurs premiers alésages (118) alignés avec un ou plusieurs premiers trous correspondants (50) du carter cylindre (10) et un ou plusieurs deuxièmes alésages (116) alignés avec un ou plusieurs deuxièmes trous correspondants (80) du chapeau de palier (56), l'assemblage comportant en outre une ou plusieurs premières tiges de fixation (120) traversant les premiers alésages (118) et pénétrant dans le ou les premiers trous correspondants et une ou plusieurs deuxièmes tiges de fixation (122) traversant les deuxièmes alésages (116) et pénétrant dans les deuxièmes trous correspondants (80).

2. Assemblage selon la revendication 1 **caractérisé en ce que** le ou les premiers alésages (118) et le ou les deuxièmes alésages (116) sont parallèles à l'axe de référence.

3. Assemblage selon l'une quelconque des revendications précédentes, **caractérisé en ce que** la bague de guidage (96) monobloc est en appui axial contre le chapeau de palier (78) et contre le carter cylindre (10) .

4. Assemblage selon l'une quelconque des revendications précédentes, **caractérisé en ce que** la bague de guidage monobloc (96) est en appui radial sur une demi-portée radiale (72) du chapeau de palier et sur une demi-portée radiale (42) du carter cylindre, tournées radialement vers l'intérieur en regard l'une de l'autre, la demi-portée radiale du chapeau de palier étant de préférence un secteur de cylindre, de préférence un secteur hémicylindrique, la demi-portée radiale du carter cylindre étant de préférence un secteur de cylindre, de préférence un secteur hémicylindrique.

5. Assemblage selon l'une quelconque des revendications précédentes, **caractérisé en ce que** la bague de guidage monobloc (96) est une bague extérieure de guidage, le palier de guidage (88) comportant en outre une bague intérieure de guidage (90) présentant une piste de guidage (126) située en regard de la piste de guidage (124) de la bague extérieure de guidage (96).

6. Assemblage selon la revendication 5, **caractérisé en ce que** l'assemblage comporte en outre une portion d'extrémité (16) d'un vilebrequin (14) comportant une portée de frettage (83) tournée radialement vers l'extérieur, la bague intérieure du palier de guidage (90) étant frettée sur la portée de frettage de la portion d'extrémité du vilebrequin.

7. Assemblage selon la revendication 6, **caractérisé en ce que** l'assemblage comporte en outre un volant d'inertie (18) solidarisé au vilebrequin par des tiges de fixation (88) traversant des alésages formés sur la bague intérieure (90) du palier de guidage.

8. Assemblage selon l'une quelconque des revendications précédentes, **caractérisé en ce que** la bague de guidage monobloc (96) est une bague extérieure de roulement sur laquelle est formé au moins un chemin de roulement extérieur tourné radialement vers l'intérieur et constituant la piste de guidage (124), le palier de guidage (88) comportant en outre un chemin de roulement intérieur (126) et des corps roulants (128) aptes à rouler sur le chemin de roulement extérieur (124) et sur le chemin de roulement intérieur (126).

9. Assemblage selon l'une quelconque des revendications 5 à 7 en combinaison avec la revendication 8, **caractérisé en ce que** la bague intérieure de guidage (90) est une bague intérieure de roulement, la piste intérieure de guidage (126) constituant le chemin de roulement intérieur (126).

10. Assemblage selon l'une quelconque des revendications précédentes, **caractérisé en ce que** les tiges de fixation (122, 120) traversant les alésages de la bague de guidage (96) monobloc et pénétrant dans les deuxièmes trous du chapeau de palier et les premiers trous du carter cylindre sont des vis, les deuxièmes trous du chapeau de palier étant de préférence des trous filetés, de préférence borgnes, les premiers trous du carter cylindre étant de préférence des trous filetés, de préférence borgnes.

11. Assemblage selon l'une quelconque des revendications précédentes, **caractérisé en ce qu'**il comporte un carter de chapeaux de paliers monobloc (12) qui forme le chapeau de palier (56) et au moins un chapeau de palier additionnel (60, 68).

12. Assemblage selon la revendication 11, **caractérisé en ce que** le chapeau de palier additionnel (60, 68) est pourvu d'alésages additionnels (76) situés dans un plan perpendiculaire à l'axe de référence (100) et alignés avec des trous additionnels correspondants (46) formés dans le carter cylindre (10), l'assemblage comportant en outre une ou plusieurs premières tiges de fixation additionnelles traversant les alésages additionnels (76) et pénétrant dans le ou les premiers trous additionnels correspondants (46).

## Patentansprüche

1. Baugruppe, die folgendes umfasst: ein Zylindergehäuse (10), mindestens einen Lagerdeckel (56) und ein zwischen Lagerdeckel (56) und Zylindergehäuse (10) sitzendes Kurbelwellenführungslager (88), **dadurch gekennzeichnet, dass** das Führungslager (88) einen einteiligen Führungsring (96) mit mindestens einer Führungsbahn (124) mit Rotationssymmetrie um eine Bezugsachse (100) umfasst, wobei der einteilige Führungsring (96) eine oder mehrere erste Bohrungen (118) umfasst, die auf eine oder mehrere entsprechende erste Löcher (50) im Zylindergehäuse (10) ausgerichtet sind, und eine oder mehrere zweite Bohrungen (116), die auf eine oder mehrere entsprechende zweite Löcher (80) im Lagerdeckel (56) ausgerichtet sind, wobei die Baugruppe des Weiteren eine oder mehrere erste Befestigungsstangen (120) umfasst, die durch die ersten Bohrungen (118) führen und in das oder die entsprechenden ersten Löcher eingreifen, und eine oder mehrere zweite Befestigungsstangen (122), die durch die zweiten Bohrungen (116) führen und in die entsprechenden zweiten Löcher (80) eingreifen.

2. Baugruppe nach Anspruch 1, **dadurch gekennzeichnet, dass** die erste(n) Bohrung(en) (118) und die zweite(n) Bohrung(en) (116) parallel zur Bezugsachse verlaufen.

3. Baugruppe nach einem der vorhergehenden Ansprüche, **dadurch gekennzeichnet, dass** der einteilige Führungsring (96) axial am Lagerdeckel (78) und am Zylindergehäuse (10) anliegt.

4. Baugruppe nach einem der vorhergehenden Ansprüche, **dadurch gekennzeichnet, dass** der einteilige Führungsring (96) radial an einer radialen Lagersitzhälfte (72) des Lagerdeckels und an einer radialen Lagersitzhälfte (42) des Zylindergehäuses anliegt, die radial nach innen einander gegenüberliegend gerichtet sind, wobei die radiale Lagersitzhälfte des Lagerdeckels vorzugsweise ein Zylindersektor bzw. vorzugsweise ein halbzylindrischer Sektor ist, wobei die radiale Lagersitzhälfte des Zylindergehäuses vorzugsweise ein Zylindersektor bzw. vorzugsweise ein halbzylindrischer Sektor ist.

5. Baugruppe nach einem der vorhergehenden Ansprüche, **dadurch gekennzeichnet, dass** der einteilige Führungsring (96) ein äußerer Führungsring ist, wobei das Führungslager (88) des Weiteren einen inneren Führungsring (90) mit einer Führungsbahn (126) gegenüber der Führungsbahn (124) des äußeren Führungsrings (96) umfasst.

6. Baugruppe nach Anspruch 5, **dadurch gekennzeichnet, dass** sie des Weiteren einen Endabschnitt (16) einer Kurbelwelle (14) mit einem radial nach außen gerichteten Schrumpfsitz (83) umfasst, wobei der Innenring des Führungslagers (90) auf den Schrumpfsitz des Kurbelwellenendabschnitts geschrumpft ist.

7. Baugruppe nach Anspruch 6, **dadurch gekennzeichnet, dass** die Anordnung des Weiteren ein Schwungrad (18) umfasst, das mit der Kurbelwelle durch Befestigungsstangen (88) befestigt ist, die durch die auf dem Innenring (90) des Führungslagers ausgebildeten Bohrungen führen.

8. Baugruppe nach einem der vorhergehenden Ansprüche, **dadurch gekennzeichnet, dass** der einteilige Führungsring (96) ein äußerer Laufring ist, auf dem mindestens eine radial nach innen gerichtete äußere Rollbahn ausgebildet ist, welche die Führungsbahn (124) bildet, wobei das Führungslager (88) des Weiteren eine innere Rollbahn (126) und Rollkörper (128) umfasst, die auf der äußeren Rollbahn (124) und auf der inneren Rollbahn(126) rollen können.

9. Baugruppe nach einem der Ansprüche 5 bis 7 in Kombination mit Anspruch 8, **dadurch gekennzeichnet, dass** der innere Führungsring (90) ein innerer Laufring ist, wobei die innere Führungsbahn (126) die innere Rollbahn (126) bildet.

10. Baugruppe nach einem der vorhergehenden Ansprüche, **dadurch gekennzeichnet, dass** die Befestigungsstangen (122, 120), die durch die Bohrungen des einteiligen Führungsrings (96) führen und in die zweiten Bohrungen des Lagerdeckels und die ersten Bohrungen des Zylindergehäuses eingreifen, Schrauben sind, wobei die zweiten Bohrungen des Lagerdeckels und die ersten Löcher des Zylindergehäuses vorzugsweise Gewindebohrungen bzw. vorzugsweise Sacklöcher sind.

11. Baugruppe nach einem der vorhergehenden Ansprüche, **dadurch gekennzeichnet, dass** sie ein einteiliges Lagerdeckelgehäuse (12) umfasst, das den Lagerdeckel (56) bildet und mindestens einen zusätzlichen Lagerdeckel (60, 68) den Lagerdeckel (56) bildet.

12. Baugruppe nach Anspruch 11, **dadurch gekennzeichnet, dass** der zusätzliche Lagerdeckel (60, 68) mit zusätzlichen Bohrungen (76) versehen ist, die sich in einer Ebene senkrecht zur Bezugsachse (100) befinden und auf die zusätzlichen entsprechenden Bohrungen (46) im Zylindergehäuse (10) ausgerichtet sind, wobei die Baugruppe des Weiteren einen oder mehrere erste zusätzliche Befestigungsstangen umfasst, die durch die zusätzlichen Bohrungen (76) führen und in das oder die entsprechenden ersten zusätzliche Löcher (46) eingreifen.

## Claims

1. An assembly including: a cylinder housing (10), at least one bearing cap (56), and a crankshaft (14) guide bearing (88) housed between the bearing cap (56) and the cylinder housing (10), **characterized in that** the guide bearing (88) comprises a one-piece guide ring (96) having at least one guide track (124) having a symmetry of revolution about a reference axis (100), the one-piece guide ring (96) having one or more first bore(s) (118) aligned with one or more corresponding first hole(s) (50) in the cylinder housing (10) and one or more second bore(s) (116) aligned with one or more corresponding second hole(s) (80) of the bearing cap (56), the assembly further comprising one or more first attachment rod(s) (120) extending through the first bores (118) and penetrating into the corresponding first hole(s) and one or more second attachment rod(s) (122) extending through the second bores (116) and penetrating into the corresponding second holes (80).

2. An assembly according to claim 1, **characterized in that** the first bore(s) (118) and the second bore(s) (116) are parallel to the reference axis.

3. An assembly according to any one of the preceding claims, **characterized in that** the one-piece guide ring (96) is in axial contact with the bearing cap (78) and the cylinder housing (10).

4. An assembly according to any one of the preceding claims, **characterized in that** the one-piece guide ring (96) is radially supported on a radial half bearing seat (72) of the bearing cap and on a radial half bearing seat (42) of the cylinder housing, facing radially inwards opposite each other, the radial half bearing seat of the bearing cap being preferably a cylinder sector, preferably a hemicylindrical sector, the radial half bearing seat of the cylinder housing being preferably a cylinder sector, preferably a hemicylindrical sector.

5. An assembly according to any one of the preceding claims, **characterized in that** the one-piece guide ring (96) is an outer guide ring, the guide bearing (88) further comprising an inner guide ring (90) having a guide track (126) located opposite the guide track (124) of the outer guide ring (96).

6. An assembly according to claim 5, **characterized in that** the assembly further comprises an end portion (16) of a crankshaft (14) having a shrink-fitting span (83) facing radially outwards, the inner ring of the guide bearing (90) being shrunk on the shrink-fitting span of the end portion of the crankshaft.

7. An assembly according to claim 6, **characterized in that** the assembly further comprises a flywheel (18) secured to the crankshaft by attachment rods (88) extending through bores formed on the inner ring (90) of the guide bearing.

8. An assembly according to any one of the preceding claims, **characterized in that** the one-piece guide ring (96) is an bearing outer ring on which at least one outer raceway radially facing inwards is formed and constitutes the guide track (124), the guide bearing (88) further comprising an inner raceway (126) and rolling bodies (128) suitable for rolling on the outer raceway (124) and on the inner raceway (126) .

9. An assembly according to any one of claims 5 to 7 in combination with claim 8, **characterized in that** the inner guide ring (90) is a bearing inner ring, the inner guide track (126) constituting the inner raceway (126).

10. An assembly according to any one of the preceding claims, **characterized in that** the attachment rods (122, 120) extending through the bores of the one-piece guide ring (96) and penetrating into the second holes of the bearing cap and the first holes of the cylinder housing are screws, the second holes of the bearing cap being preferably threaded, preferably blind, holes, the first holes of the cylinder housing being preferably threaded, preferably blind, holes.

11. An assembly according to any one of the preceding claims, **characterized in that** it comprises a one-piece bearing cap housing (12) which forms the bearing cap (56) and at least one additional bearing cap (60, 68).

12. The assembly according to claim 11, **characterized in that** the additional bearing cap (60, 68) is provided with additional bores (76) located in a plane perpendicular to the reference axis (100) and aligned with corresponding additional holes (46) formed in the cylinder housing (10), the assembly further comprising one or more first additional attachment rod(s) extending through the additional bores (76) and penetrating into the corresponding first additional holes (46).
